# FASCICULE DE BREVET EUROPEEN

(11) **EP 2 125 345 B1**
(45) Date de publication et mention de la délivrance du brevet: **02.02.2011**
(21) Numéro de dépôt: 08775572.4
(22) Date de dépôt: 19.02.2008
(51) Int. Cl.: B29C 70/38, B29L 31/30

(54) **PROCEDE ET DISPOSITIF DE FABRICATION DE PIECES EN MATERIAU COMPOSITE, EN PARTICULIER DE TRONÇONS DE FUSELAGE D'AVION**
VERFAHREN UND VORRICHTUNG ZUR HERSTELLUNG VON TEILEN AUS EINEM VERBUNDWERKSTOFF, INSBESONDERE ABSCHNITTE EINES FLUGZEUGRUMPFES
METHOD AND DEVICE FOR MAKING PARTS OF A COMPOSITE MATERIAL, IN PARTICULAR SECTIONS OF AN AIRCRAFT FUSELAGE

(30) Priorité: 21.02.2007 FR 0701241
(43) Date de publication de la demande: 02.12.2009
(73) Titulaire: Coriolis Composites, 69001 Lyon (FR)
(72) Inventeur: HAMLYN, Alexander, F-56270 Ploemeur (FR)
(74) Mandataire: Hays, Bertrand
(86) Numéro de dépôt international: PCT/FR2008/000215
(87) Numéro de publication internationale: WO 2008/129156

(56) Documents cités:
- US-A- 4 574 029
- US-A1- 2005 023 414
- US-A1- 2005 039 844
- US-B2- 7 048 024

## Description

La présente invention concerne un procédé et un dispositif de fabrication de pièces creuses en matériau composite comprenant une peau, et éventuellement des éléments de renforts, et en particulier la fabrication de pièces creuses de type tronçons de fuselage d'avion.

La fabrication de fuselage d'avion s'effectue classiquement par assemblage de portions de fuselage de forme générale cylindrique, chaque portion comprenant une enveloppe ou peau et des éléments de renforts tels que des lisses, des cadres, et des renforts locaux spécifiques pour l'assemblage ultérieur des ailes, du cockpit, et du train d'atterrissage par exemple.

Afin de limiter leur poids tout en garantissant de bonnes propriétés mécaniques, il a été proposé des tronçons en matériaux composites formés de fibres longues noyées dans une matrice de résine, en particulier de fibres de carbone noyées dans une matrice de résine thermodurcissable. La peau en matériau composite est classiquement obtenue par drapage de fibres imprégnées de résine non durcie ou crue sur la surface extérieure d'un outil constitué d'un mandrin mâle rotatif. Les fibres sont appliquées sous forme de bande au moyen d'une tête de placement de fibres associée à un système de déplacement cartésien installé autour du mandrin. Cette peau crue, avec des fibres imprégnées de résine non durcie, est ensuite polymérisée ou durcie en four autoclave. Les éléments de renforts en matériau composite sont fabriqués séparément à partir de fibres préimprégnées de résine, puis sont placés dans des évidements du mandrin avant la réalisation de la peau par placement de fibres. La peau et les éléments de renfort à l'état cru sont ensuite durcis ensemble en autoclave. Les tronçons ainsi obtenus sont de type fermés, avec une peau présentant en section transversale un contour fermé s'étendant sur 360°.

Un tel procédé de fabrication avec outil tournant s'avère particulièrement délicat à mettre en oeuvre. Il nécessite des moyens de mise en oeuvre lourds, volumineux et complexes, le mandrin entraîné en rotation devant être suffisamment rigide pour éviter ou limiter son fléchissement.

Par ailleurs, pour l'obtention d'un état de surface extérieure propre, il est nécessaire d'appliquer des contre-formes, appelés également conformateurs, contre la surface extérieure de la peau crue pour son durcissement en autoclave. Ces conformateurs avec leur système de maintien sont longs et fastidieux à installer, et augmentent le poids et le volume de l'ensemble qui doit passer en autoclave.

Pour éviter l'utilisation de conformateurs, il a été proposé dans le document brevet US 7 048 024 de réaliser la peau des tronçons par application de fibres sur la surface intérieure d'un mandrin creux rotatif. Le procédé décrit permet uniquement la réalisation de la peau d'un tronçon, sans éléments de renfort, et est également basé sur un outil tournant.

Le document US 2005/0039844 décrit un procédé et un dispositif de fabrication de pièces creuses en matériau composite comprenant une peau, caractérisé par l'utilisation d'un bras poly-articulé équipé d'une tête de placement de fibres à l'intérieur d'un moule femelle de forme allongée. Le bras est maintenu à son extrémité par un support fixe placé en dehors dudit moule femelle.

Le document US 4,574,029 décrit un dispositif similaire dans lequel le bras est également maintenu par un support fixe placé en dehors du moule.

Le but de la présente invention est de pallier les inconvénients précités en proposant un procédé de fabrication de pièces creuses, notamment de tronçons de fuselage d'avion, qui soit simple de mise en oeuvre.

A cet effet, la présente invention propose un procédé de fabrication de pièces creuses en matériau composite comprenant une peau, et éventuellement des éléments de renforts, ledit procédé étant caractérisé en ce qu'il comprend
a) une étape consistant à faire entrer un bras poly-articulé équipé d'une tête de placement de fibres à l'intérieur d'un moule femelle de forme allongée, ledit moule femelle étant ouvert par une fente longitudinale destinée à recevoir les moyens de support dudit bras poly-articulé,
b) une étape d'application de fibres, de préférence de fibres imprégnées de résine, sur la surface intérieure de moulage du moule femelle au moyen de la tête de placement de fibres pour former ladite peau en matériau composite, ladite étape d'application s'effectuant par déplacement de la tête d'application au moyen du bras poly-articulé et déplacement relatif en translation desdits moyens de support du bras poly-articulé le long de ladite fente longitudinale du moule femelle.

Selon l'invention, les pièces creuses en matériau composite sont fabriquées au moyen d'un moule femelle de forme allongée présentant une fente longitudinale pour permettre le déplacement d'un bras poly-articulé portant une tête de placement de fibres lors de la réalisation de la peau en matériau composite. Le procédé selon l'invention permet la fabrication de pièces creuses de grandes dimensions, sans outil tournant.

Le moule femelle présente une section transversale de type annulaire, la fente longitudinale constitue une ouverture étroite ayant en section transversale une petite dimension par rapport au contour de la surface intérieure de moulage en section transversale. Le moule femelle peut présenter tout type de surface intérieure concave, avec une section transversale constante ou non constante, avec ou sans plan de symétrie longitudinal. La surface intérieure est en particulier globalement cylindrique et/ou tronconique, bien que des surfaces intérieures concaves comprenant des angles entre deux parties planes adjacentes puissent également être utilisées.

Le procédé selon l'invention permet de fabriquer des pièces creuses, ouvertes, ayant une ouverture longitudinale étroite correspondant à la fente longitudinale du moule femelle. Une pièce creuse de section transversale fermée peut aisément être réalisée en assemblant à la pièce creuse ouverte obtenue une pièce complémentaire ayant une forme complémentaire de celle de l'ouverture longitudinale. L'étape d'application comprend de préférence l'application de fibres imprégnées de résine. En variante, le procédé comprend une étape d'application de fibres sèches suivie d'une étape d'injection ou d'infusion de résine dans les fibres sèches placées sur le moule femelle.

Selon un mode de réalisation, les moyens de support comprennent au moins un rail linéaire pour le support et le déplacement du bras poly-articulé, et l'étape b) d'application est réalisée sur un moule femelle stationnaire, par déplacement du bras poly-articulé le long du rail linéaire reçu dans la fente longitudinale du moule femelle, ledit rail linéaire repose de préférence sur le sol et le moule femelle est disposé au-dessus dudit rail et repose sur le sol de part et d'autre de la fente longitudinale.

Selon un mode de réalisation, le moule femelle comprend au moins une extrémité ouverte où débouche ladite fente longitudinale, l'entrée du bras poly-articulé à l'étape a) s'effectuant par ladite extrémité ouverte par un déplacement relatif en translation longitudinale des moyens de support par rapport au moule femelle.

Lé procédé selon l'invention peut avantageusement être appliqué pour la réalisation de pièces creuses telles que des tronçons de fuselage d'avion, comprenant une peau de section globalement cylindrique et/ou tronconique, avec au moins un plan longitudinal de symétrie. Les pièces creuses ouvertes résultant du procédé décrit ci-dessus constituent des tronçons ouverts de fuselage qui seront par la suite refermés par assemblage d'une ou plusieurs pièces complémentaires en matériau composite de forme complémentaire de celle des ouvertures longitudinales des tronçons ouverts pour former des tronçons fermés. Dans le cas de tronçon de fuselage d'avion, lesdites pièces complémentaires constitueront avantageusement la partie supérieure, dite de toit, du fuselage d'avion. Cette partie de toit est en effet peu sollicitée, et nécessite donc peu d'éléments de renfort ou peut être de structure différente, par, exemple de structure sandwich.

Les pièces creuses ouvertes de type tronçons de fuselage peuvent également être utilisées pour la réalisation de coques de bateau, de sous-marins, de lanceurs spatiaux, ou de cuve par exemple.

Selon un mode de réalisation de pièces creuses de type tronçons de fuselage d'avions, l'étape b) d'application de fibres pour former la peau en matériau composite est suivie des étapes suivantes :
c) une étape de mise en place d'éléments de renfort en matériau composite à l'état cru, à l'intérieur du moule femelle, contre la peau, tels que des lisses, des cadres et des renforts locaux,
d) une étape de durcissement simultanée de la peau et des éléments de renfort par exemple par passage en four autoclave, et
e) une étape de démoulage de la pièce creuse en matériau composite.
   Pour obtenir une peau présentant également un état de surface intérieure propre, le procédé comprend avantageusement, après l'étape c), la mise en place d'une contre-forme mâle à l'intérieur du moule femelle, contre la peau en matériau composite et les éléments de renfort, cette contre-forme mâle étant maintenue pendant l'étape d) de durcissement.

Selon un mode de réalisation, le moule femelle est rigide et la contre-forme mâle est souple, par exemple formée d'une tôle en au moins deux parties avec un recouvrement progressif entre elles, pour permettre son insertion dans le moule femelle dans une position rétractée et puis son plaquage dans une position déployée contre la peau.

En variante, le moule femelle selon l'invention est formé d'une contre-forme femelle souple qui est rigidifiée dans un état rétracté au moyen de raidisseurs pour l'étape d'application de fibres. Après l'application des fibres, les raidisseurs seront retirés pour permettre son emmanchement sur un moule mâle rigide.

Selon une particularité, le procédé comprend une étape d'assemblage à la peau d'une pièce complémentaire en matériau composite, en une ou plusieurs parties, ayant une forme complémentaire de celle de l'ouverture longitudinale de la peau, pour former une pièce creuse de section transversale fermée.

Dans un mode de réalisation, ladite pièce complémentaire est assemblée à la peau durcie, après l'étape d) de durcissement, et éventuellement après l'étape e) de démoulage.

Dans un autre mode de réalisation, le procédé comprend après l'étape c) une étape de positionnement d'une pièce complémentaire à l'état cru au niveau de la fente longitudinale du moule femelle, ladite pièce complémentaire étant durcie et assemblée avec la peau lors de l'étape d) de durcissement de manière à obtenir une pièce creuse fermée.

La présente invention a également pour objet un procédé de fabrication de fuselage d'avion, caractérisé en ce qu'il comprend la fabrication d'au moins deux tronçons ouverts de fuselage d'avion tel que décrit précédemment, et l'assemblage d'une ou plusieurs pièces complémentaires en matériau composite pour former des tronçons fermés s'étendant sur 360°, lesdites pièces complémentaires formant la partie supérieure du fuselage, ledit assemblage des pièces complémentaires étant de préférence réalisé après l'assemblage des tronçons ouverts par leur extrémités ouvertes. Cet assemblage de tronçons ouverts permet de reprendre aisément les éventuels jeux entre les tronçons et s'avère de ce fait plus facile à réaliser qu'un assemblage de tronçons fermés.

La présente invention a également pour objet un dispositif pour la mise en oeuvre des procédés décrits précédemment, caractérisé en ce qu'il comprend un bras poly-articulé équipé d'une tête de placement de fibres et de préférence monté mobile sur au moins un rail linéaire porté au sol, un moule femelle comprenant au moins une extrémité ouverte et une fente longitudinale débouchant sur ladite extrémité ouverte, et des moyens de maintien aptes à maintenir ledit moule femelle de manière stationnaire au-dessus dudit rail en appui sur le sol sur sensiblement toute sa longueur de part et d'autre dudit rail, de sorte que ledit bras poly-articulé soit apte à se déplacer à l'intérieur du moule en rentrant par son extrémité ouverte, lesdits moyens de maintien étant par exemple formés par deux semelles dudit moule engagées sur des rails de guidage fixés au sol.

L'invention sera mieux comprise, et d'autres buts, détail, caractéristiques et avantages apparaîtront plus clairement au cours de la description explicative détaillée qui va suivre d'un mode de réalisation particulier actuellement préféré de l'invention, en référence aux dessins schématiques annexés sur lesquels :
- la figure 1 représente une vue schématique en perspective d'un dispositif pour la fabrication de pièces creuses en matériau composite selon l'invention, illustrant le système de placement de fibres, le moule femelle, le système d'application d'une contre-forme et l'autoclave ;
- la figure 2 une vue de côté du moule femelle et du système de placement de la figure 1 avant l'entrée du robot dans le moule femelle ;
- la figure 3 une vue de face du moule femelle et du système de placement de fibres lors de l'application de fibres sur la surface intérieure du moule femelle stationnaire ;
- la figure 4 représente une vue en perspective du moule femelle lors de son positionnement sur le système d'application de contre-forme ;
- la figure 5 représente respectivement une vue de face du système d'application de contre-forme positionné dans le moule femelle ; et,
- la figure 6 est une vue en coupe transversale partielle du moule femelle avec la peau et les renforts intercalés entre la contre-forme et le moule femelle.

Les figures illustrent un procédé et un dispositif selon l'invention pour la fabrication d'un tronçon de fuselage d'avion en matériau composite comprenant une peau et des éléments de renfort. Bien entendu, l'invention peut être appliquée à la fabrication de toute pièce creuse en matériau composite tel que décrit précédemment.

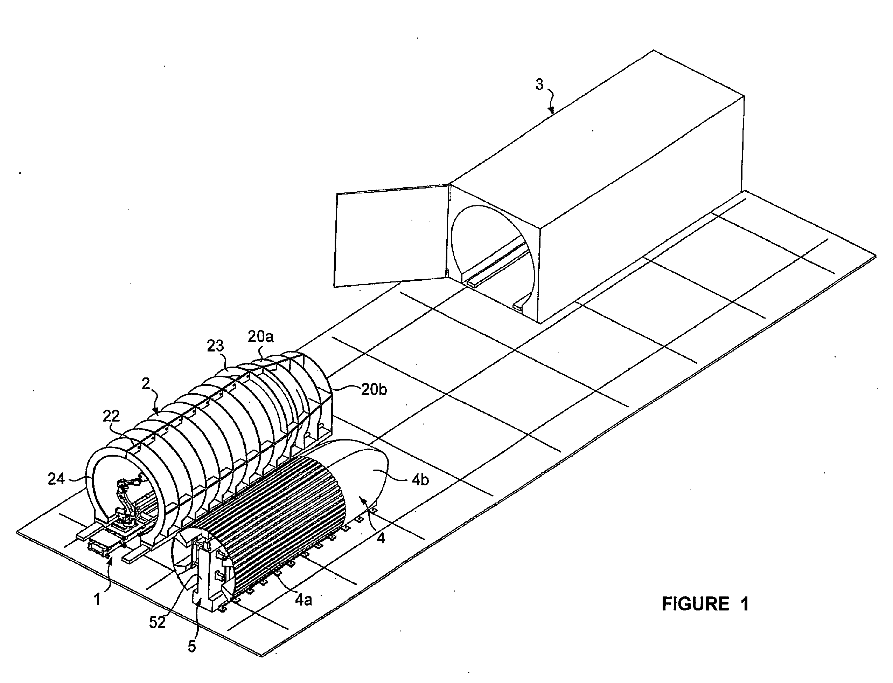

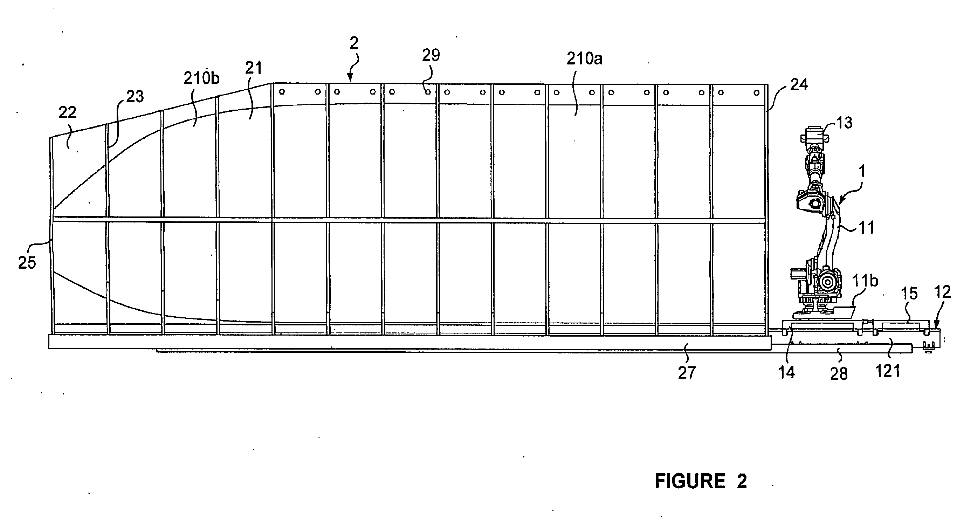

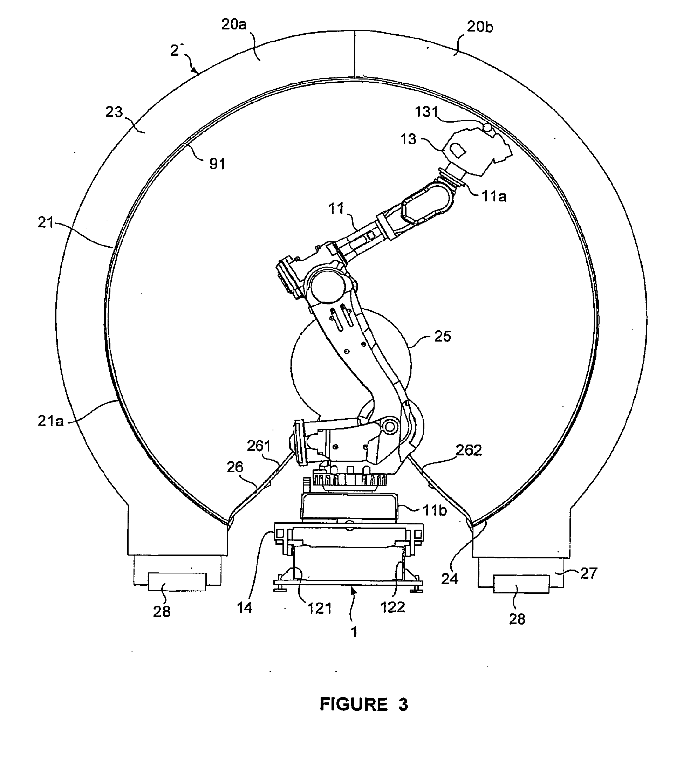

En référence aux figures 1 à 3, le dispositif selon l'invention comprend un système de placement de fibres 1 et un moule femelle 2, ainsi qu'un four autoclave 3 et un système d'application 5 de contre-forme 4. Le moule femelle 2 présente une surface intérieure 21a de moulage dont la forme correspond à celle de la peau du tronçon que l'on souhaite réaliser. La surface intérieure est formée par la surface interne d'une paroi 21 sensiblement continue, constituée d'une ou plusieurs tôles métalliques ou en matériau composite, cette paroi étant équipée extérieurement de renforts longitudinaux 22 et transversaux 23 pour rigidifier le moule femelle. Dans cet exemple de réalisation, le moule femelle est destiné à la fabrication du tronçon avant d'un fuselage d'avion qui inclut la partie cockpit. La surface intérieure 21a de moulage présente une partie 210a, dite arrière, ayant une section transversale sensiblement constante, de forme générale cylindrique, cette partie avant partant de l'extrémité arrière 24 ouverte et globalement circulaire du moule, et se prolongeant par une deuxième partie 210b, dite avant, ayant une section transversale non constante, qui diminue en direction de l'extrémité avant 25 du moule. Dans cet exemple, la partie avant 210b a une forme tronconique, avec une extrémité avant 25 ouverte de forme générale circulaire, de rayon inférieur à l'extrémité arrière 24 ouverte. A titre d'exemple, le rayon de l'extrémité arrière 24 est de l'ordre de 2m.

Le moule femelle présente une fente longitudinale 26 s'étendant sur toute la longueur du moule, de l'extrémité arrière 24 à l'extrémité avant 25, pour permettre le positionnement du moule femelle au-dessus du système de placement de fibres 1 tel que décrit ci-après.

Le système de placement de fibres comprend un bras poly-articulé 11, du type robot six axes, connu en soi, monté mobile sur un axe linéaire 12, et dont le poignet d'extrémité 11a est équipé d'une tête de placement de fibres 13. Le bras poly-articulé assure le déplacement de la tête de fibres dans toutes les directions. La tête de placement de fibres comprend de manière connue un rouleau d'application 131 apte à venir en contact avec le moule pour appliquer une bande formée de plusieurs fibres préimprégnées de résine. Le bras poly-articulé est fixé par son embase 11b sur un chariot 14 montré coulissant sur l'axe linéaire 12, ledit axe linéaire étant constitué de deux rails 121, 122 parallèles fixés au sol. Le chariot est équipé de moyens d'entraînement, par exemple de type galets motorisés asservis par une unité de commande pour le déplacement de la tête de placement le long de ces rails. Les fibres seront avantageusement stockées en bobine sur un cantre (non représenté) et acheminées individuellement jusqu'à la tête d'application via des tubes flexibles d'acheminement, tel que décrit dans le document brevet WO2006/092514. Par ailleurs, un ou plusieurs systèmes limiteur de tension tels que décrits dans ce document brevet peuvent être prévus entre le cantre et la tête d'application pour réduire la tension des fibres au niveau du rouleau. Le cantre est également monté sur un chariot suiveur 15, monté sur les rails 121, 122, et par exemple relié mécaniquement au chariot 14 portant le robot.

La fente longitudinale 26 du moule s'étend sur un secteur angulaire suffisant pour permettre le positionnement des rails entre les deux bords longitudinaux opposés 261, 262 de ladite fente longitudinale. La fente longitudinale s'étend transversalement sur un petit secteur angulaire par rapport au secteur angulaire sur lequel s'étend la surface intérieure de moulage. La surface intérieure de moulage s'étend donc transversalement sur un secteur angulaire de plus de 180°, de préférence de plus de 270°, par exemple de l'ordre de 300°, tel que représenté sur les figures.

Le moule femelle comprend deux semelles 27 longitudinales disposées de part et d'autre de la fente longitudinale, par lesquelles le moule est en appui sur le sol de chaque côté des rails. Tel qu'illustré sur les figures, les semelles reposent avantageusement sur des rails de guidage 28 disposés de part et d'autre de l'axe linéaire 12. En variante, le moule femelle est équipé de son propre système de déplacement, chaque semelle étant par exemple montée sur un chariot motorisé autonome commandé par un système de guidage et de positionnement radio, laser ou vision. Le moule repose sur le sol sur toute sa longueur, ce qui garantit la stabilité et la rigidité du moule pendant les opérations d'application de fibres.

Pour la réalisation de la peau 91 du tronçon de fuselage, le moule femelle est amené au-dessus des rails 121, 122 du système de placement de fibres en déplaçant le moule femelle sur les rails de guidage. Le moule femelle est ensuite immobilisé pour les opérations d'application de fibre. La peau est réalisée par déplacement de la tête d'application au moyen du bras poly-articulé 11 et déplacement du bras poly-articulé sur les rails 121, 122, le long de la fente longitudinale du moule femelle, l'entrée du robot dans le moule s'effectuant par l'extrémité arrière ouverte du moule femelle. Une fois la peau crue réalisée, le moule femelle peut être transféré dans un four autoclave 3 (figure 1) pour le durcissement par polymérisation et/ou réticulation de la peau sous pression. Le moule femelle est ensuite retiré du four autoclave, et la peau durcie est démoulée. Pour ce faire, le moule femelle est réalisé en deux demi-moules symétriques 20a, 20b assemblés l'un à l'autre par leur partie supérieure au moyen de boulons 29. Un joint.est avantageusement positionné à l'interface de jonction des deux demi-moules pour notamment garantir l'étanchéité lors de l'opération de mise sous vide décrite ci-après.

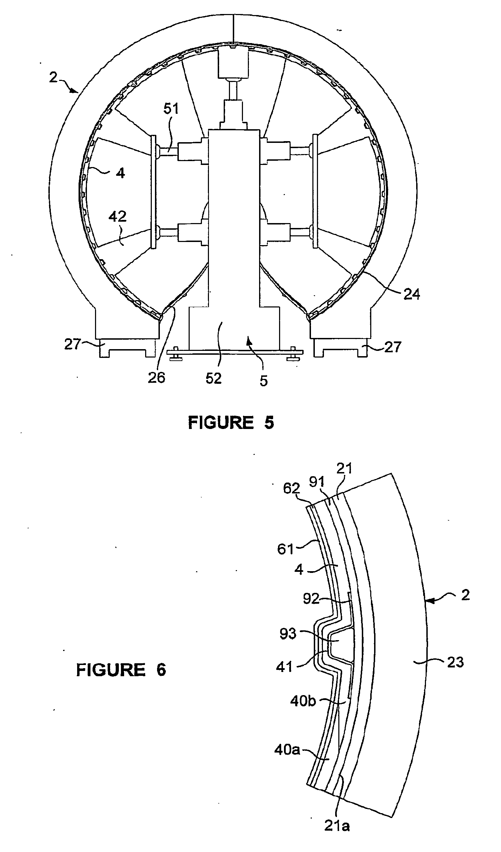

Avantageusement, des éléments de renfort en matériau composite sont disposés contre la surface intérieure de la peau pour être durcis en four autoclave avec la peau. Dans cet exemple de réalisation, des profilés longitudinaux, usuellement appelés lisses, sont disposés contre la surface intérieure de la peau, sur sensiblement toute sa longueur. Comme mieux visible sur la figure 6, les lisses 92 ont une section transversale en forme d'oméga et sont placées sur la peau 91 en intercalant un noyau 93, par exemple en silicone, qui sera retiré après l'opération de durcissement. Bien entendu, d'autres types d'élément de renfort non illustrés peuvent être prévus, notamment des renforts locaux pour le train d'atterrissage avant, le cockpit, et les hublots latéraux par exemple.

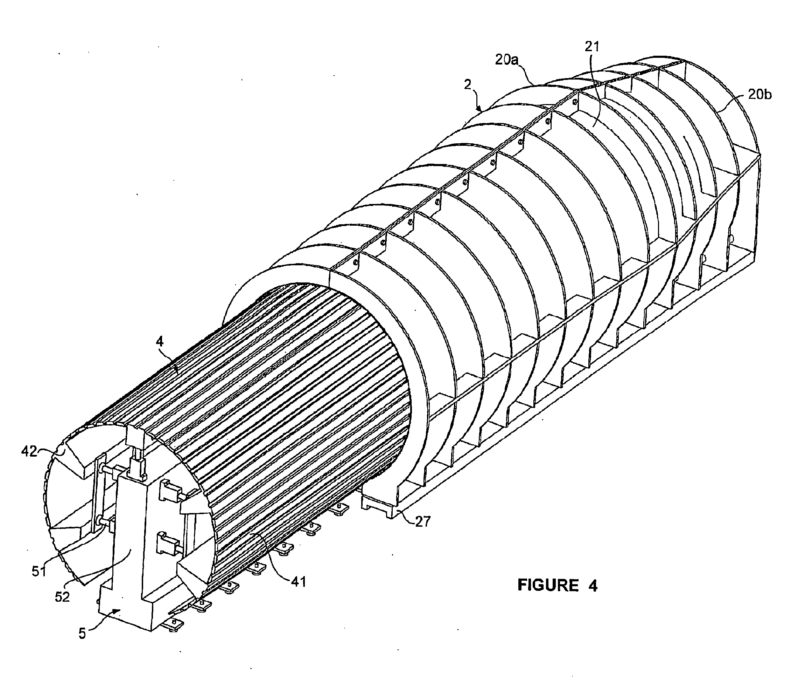

En référence aux figures 4 à 6, le dispositif comprend avantageusement un système d'application 5 d'une contre-forme ou contre-moule pour le positionnement d'une contre-forme 4 contre les lisses 92 et la surface intérieure de la peau 91, afin d'assurer le maintien des lisses contre la peau lors de leur assemblage par durcissement simultané et surtout garantir un état de surface intérieure propre pour le tronçon final.

La contre-forme 4 est formée d'une tôle de forme complémentaire de celle du moule femelle, avec une partie arrière 4a de forme cylindrique et une partie avant 4b de forme générale tronconique. La contre-forme présente sur sa surface extérieure des renfoncements longitudinaux 41 de forme complémentaire de celle des lisses. Bien que non représenté pour des raisons de simplification, la partie avant 4b de la contre-forme comprend également des renfoncements pour la réception de lisses. Comme illustrée à la figure 6, la contre-forme est formée d'une tôle en plusieurs parties 40a, 40b avec un recouvrement progressif entre deux parties adjacentes.

La contre-forme est disposée sur le système d'application 5 qui comprend un ensemble de vérins 51 montés le long d'un support longitudinal 52 fixé au sol pour permettre le déploiement de la contre-forme d'une position rétractée vers une position déployée. La contre-forme présente sur sa surface intérieure des nervures longitudinales 42 par lesquelles la contre-forme vient en appui contre les tiges des vérins.

Après réalisation de la peau et la mise en place des lisses dans le moule femelle, le moule femelle est déplacé en translation pour être amené sur la contre-forme qui est en position rétractée sur le système d'application 5, la fente longitudinale du moule permettant le passage du support longitudinal 52 du système d'application lors de cet emmanchement. Les vérins sont ensuite actionnés pour plaquer la contre-forme contre la peau et les lisses, puis la contre-forme est assemblée au moule femelle par des moyens d'assemblage appropriés, disposés notamment au niveau des ouvertures avant 25 et arrière 24 du moule femelle. Les vérins sont ensuite rétractés, puis le moule femelle avec la contre-forme sont retirés du système d'application 5 par un déplacement inverse en translation.

Avant l'insertion dans le four autoclave 3, une bâche à vide 61 (figure 6), connue en soi, sera avantageusement montée à l'intérieur du moule femelle contre la contre-forme, en intercalant un feutre drainant 62 pour faciliter la mise sous vide.

Le fuselage d'avion sera réalisé en au moins deux tronçons. Des moules femelles de forme spécifique seront prévus pour la réalisation des autres tronçons du fuselage. Au moins un autre moule femelle spécifique de section non constante sera prévu pour former le tronçon arrière du fuselage, et un ou plusieurs moules de section transversale constante, globalement cylindrique, pourront être prévus pour former des tronçons intermédiaires. Les tronçons ouverts obtenus au moyen de moules femelles selon l'invention seront ensuite assemblés les uns aux autres, de manière connue en soi, et des pièces complémentaires dites de toit seront assemblées auxdits tronçons ouverts.

Dans une variante de réalisation, le chariot 14 ou l'embase 11b du bras poly-articulé présente une section transversale en forme de I majuscule, la fente longitudinale du moule femelle étant destinée à recevoir la partie centrale du I, l'ailette inférieure du I sous le moule femelle et l'ailette supérieure à l'intérieur du moule femelle. La largeur de la fente peut ainsi être sensiblement réduite par rapport au mode de réalisation illustré. L'axe linéaire 12 est alors encastré dans le sol et/ou le moule femelle est surélevé par rapport au niveau du sol.

Bien que l'invention ait été décrite en liaison avec un mode de réalisation particulier, il est bien évident qu'elle n'y est nullement limitée et qu'elle comprend tous les équivalents techniques des moyens décrits ainsi que leurs combinaisons si celles-ci entrent dans le cadre de l'invention définie par les revendications.

## Revendications

1. Procédé de fabrication de pièces creuses en matériau composite comprenant une peau, et éventuellement des éléments de renforts, ledit procédé étant **caractérisé en ce qu'**il comprend
a) une étape consistant à faire entrer un bras poly-articulé (11) équipé d'une tête de placement de fibres (13) à l'intérieur d'un moule femelle (2) de forme allongée, ledit moule femelle étant ouvert par une fente longitudinale (26) destinée à recevoir les moyens de support (12, 14) dudit bras poly-articulé,
b) une étape d'application de fibres sur la surface intérieure de moulage (21a) du moule femelle au moyen de la tête de placement de fibres pour former ladite peau (91) en matériau composite, ladite étape d'application s'effectuant par déplacement de la tête d'application au moyen du bras poly-articulé et déplacement relatif en translation desdits moyens de support du bras poly-articulé le long de ladite fente longitudinale du moule femelle.

2. Procédé selon la revendication 1, **caractérisé en ce que** les moyens de support comprennent au moins un rail linéaire (121, 122) pour le support et le déplacement du bras poly-articulé (11), et **en ce que** l'étape b) d'application est réalisée sur un moule femelle (2) stationnaire, par déplacement du bras poly-articulé le long du rail linéaire reçu dans la fente longitudinale (26) du moule femelle.

3. Procédé selon la revendication 1 ou 2, **caractérisé en ce que** le moule femelle (2) comprend au moins une extrémité ouverte (24) où débouche ladite fente longitudinale (26), l'entrée du bras poly-articulé (11) à l'étape a) s'effectuant par ladite extrémité ouverte par un déplacement relatif en translation longitudinale des moyens de support (12, 14) par rapport au moule femelle.

4. Procédé selon la revendication 3, en particulier pour la réalisation de pièces creuses de type tronçons de fuselage d'avions, **caractérisé en ce que** l'étape b) d'application de fibres pour former la peau en matériau composite est suivie des étapes suivantes :
c) une étape de mise en place d'éléments de renfort (92) en matériau composite à l'état cru, à l'intérieur du moule femelle (2), contre la peau (91),
d) une étape de durcissement simultanée de la peau et des éléments de renfort, et
e) une étape de démoulage de la pièce creuse en matériau composite.

5. Procédé selon la revendication 4, **caractérisé en ce qu'**il comprend, après l'étape c), la mise en place d'une contre-forme mâle (4) à l'intérieur du moule femelle (2) contre la peau en matériau composite et les éléments de renfort (92), cette contre-forme mâle étant maintenue pendant l'étape d) de durcissement.

6. Procédé selon la revendication 4 ou 5, **caractérisé en ce qu'**il comprend une étape d'assemblage à la peau (91) d'une pièce complémentaire en matériau composite, en une ou plusieurs parties, ayant une forme complémentaire de celle de l'ouverture longitudinale de la peau pour former une pièce creuse de section transversale fermée.

7. Procédé selon la revendication 6, **caractérisé en ce que** ladite pièce complémentaire est assemblée à la peau (91) durcie, après l'étape d) de durcissement.

8. Procédé selon la revendication 6, **caractérisé en ce qu'**il comprend après l'étape c) une étape de positionnement d'une pièce complémentaire à l'état cru au niveau de la fente longitudinale (26) du moule femelle, ladite pièce complémentaire étant durcie et assemblée avec la peau (91) lors de l'étape d) de durcissement de manière à obtenir une pièce creuse fermée.

9. Procédé de fabrication de fuselage d'avion, **caractérisé en ce qu'**il comprend
- la fabrication d'au moins deux tronçons ouverts de fuselage d'avion selon l'une des revendications 4 à 8,
- et l'assemblage d'une ou plusieurs pièces complémentaires en matériau composite pour former des tronçons fermés s'étendant sur 360°, lesdites pièces complémentaires formant la partie supérieure du fuselage.

10. Dispositif pour la mise en oeuvre du procédé selon l'une des revendications 1 à 9, **caractérisé en ce qu'**il comprend
- un bras poly-articulé (11) équipé d'une tête de placement de fibres (13) et monté mobile sur au moins un rail linéaire (121, 122) porté au sol,
- un moule femelle (2) comprenant au moins une extrémité ouverte (24) et une fente longitudinale (26) débouchant sur ladite extrémité ouverte, et
- des moyens de maintien (27, 28) aptes à maintenir ledit moule femelle de manière stationnaire au-dessus dudit rail en appui sur le sol sur sensiblement toute sa longueur de part et d'autre dudit rail, de sorte que ledit bras poly-articulé soit apte à se déplacer à l'intérieur du moule en rentrant par son extrémité ouverte.

## Claims

1. Method for manufacturing hollow components out of a composite material, that include a skin, and possibly strengthening elements, said method being **characterized in that** it includes
a) a step consisting in inserting a multi-articulated arm (11) fitted with a fibre placement head (13) inside a female mould (2) of elongated shape, said female mould being open via a longitudinal slit (26) intended to receive the support means (12, 14) of said multi-articulated arm,
b) a step of applying fibres to the inner moulding surface (21a) of the female mould using the fibre placement head to form said composite material skin (91), said application step being performed by displacement of the application head using the multi-articulated arm and relative displacement in translation of said support means of the multi-articulated arm along said longitudinal slit of the female mould.

2. Method according to claim 1, **characterized in that** the support means include at least one linear rail (121, 122) for the support and displacement of the multi-articulated arm (11), and **in that** the application step b) is performed on a stationary female mould (2), by displacement of the multi-articulated arm along the linear rail received in the longitudinal slit (26) of the female mould.

3. Method according to claim 1 or 2, **characterized in that** the female mould (2) includes at least one open end (24) where said longitudinal slit (26) emerges, the multi-articulated arm (11) being inserted in step a) through said open end by a relative displacement in longitudinal translation of the support means (12, 14) relative to the female mould.

4. Method according to claim 3, in particular for making hollow components of the airplane fuselage section type, **characterized in that** the fibre application step b) in order to form the composite material skin is followed by the following steps:
c) a step of installing strengthening elements (92) made out of a composite material in its crude state, inside the female mould (2), against the skin (91),
d) a step of simultaneous hardening of the skin and strengthening elements, and
e) a step of demoulding the hollow composite material part.

5. Method according to claim 4, **characterized in that** it includes, after step c), the installation of a male counter-form (4) inside the female mould (2), against the composite material skin and strengthening elements (92), this male counter-form being held in place during the hardening step d).

6. Method according to claim 4 or 5, **characterized in that** it includes a step of coupling to the skin (91) a complementary component of composite material, in one or more parts, that is complementary in shape to that of the longitudinal opening of the skin, so as to form a hollow component of closed transverse cross-section.

7. Method according to claim 6, **characterized in that** said complementary component is coupled to the hardened skin (91), after the hardening step d).

8. Method according to claim 6, **characterized in that** it includes after step c) a step of positioning a complementary component in its crude state at the longitudinal slit (26) of the female mould, said complementary component being hardened and coupled with the skin (91) during the hardening step d) so as to obtain a closed hollow part.

9. Method for manufacturing airplane fuselage, **characterized in that** it includes
- the manufacture of at least two open sections of airplane fuselage according to one of claims 4 to 8,
- and the assembly of one or more complementary components of composite material to form closed sections extending over 360°, said complementary components forming the upper part of the fuselage.

10. Device for implementing the method according to one of claims 1 to 9, **characterized in that** it includes
- a multi-articulated arm (11) fitted with a fibre placement head (13) and mounted mobile on at least one linear rail (121, 122) carried on the ground,
- a female mould (2) including at least one open end (24) and one longitudinal slit (26) emerging on said open end, and
- holding means (27, 28) able to hold said female mould in a stationary way over said rail in support on the ground over substantially the whole of its length on either side of said rail, such that said multi-articulated arm is able to be displaced inside the mould returning through its open end.

## Patentansprüche

1. Verfahren zum Herstellen von Hohlteilen aus einem Verbundwerkstoff mit einer Außenhaut und gegebenenfalls Verstärkungselementen, wobei das Verfahren **dadurch gekennzeichnet ist, dass** es umfasst:
a) einen Schritt zum Einführen eines mit einem Faseranordnungskopf (13) versehenen, mehrfach angelenkten Arms (11) in das Innere einer länglichen Aufnahme-Gießform (2), wobei die Aufnahme-Gießform über einen Längsspalt (26) geöffnet ist, der dazu bestimmt ist, die Halterungsmittel (12, 14) zum Haltern des mehrfach angelenkten Arms aufzunehmen,
b) einen Schritt zum Anbringen von Fasern auf die Forminnenfläche (21a) der Aufnahme-Gießform mit Hilfe des Faseranordnungskopfes, um die Haut (91) aus Verbundwerkstoff zu bilden, wobei der Schritt zur Anbringung durch Verlagerung des Anbringungskopfes mit Hilfe des mehrfach angelenkten Arms und durch relative Verschiebung der Halterungsmittel zum Haltern des mehrfach angelenkten Arms entlang des Längsspalts der Aufnahme-Gießform erfolgt.

2. Verfahren nach Anspruch 1, **dadurch gekennzeichnet, dass** die Halterungsmittel zumindest eine lineare Schiene (121, 122) für die Halterung und Verlagerung des mehrfach angelenkten Arms (11) aufweisen und dass der Anbringungsschritt b) an einer stationären Aufnahme-Gießform (2) durch Verlagerung des mehrfach angelenkten Arms entlang der linearen Schiene erfolgt, die im Längsspalt (26) der Aufnahme-Gießform aufgenommen ist.

3. Verfahren nach Anspruch 1 oder 2, **dadurch gekennzeichnet, dass** die Aufnahme-Gießform (2) zumindest ein offenes Ende (24) aufweist, wohin der Längsspalt (26) mündet, wobei das Einführen des mehrfach angelenkten Arms (11) in Schritt a) über das offene Ende durch relative Längsverschiebung der Halterungsmittel (12, 14) bezüglich der Aufnahme-Gießform erfolgt.

4. Verfahren nach Anspruch 3, insbesondere zum Herstellen von Hohlteilen vom Typ Flugzeugrumpfabschnitte, **dadurch gekennzeichnet, dass** dem Faseranbringungsschritt b) zum Bilden der Haut aus Verbundwerkstoff nachfolgende Schritte folgen:
c) ein Schritt zum Anbringen von Verstärkungselementen (92) aus Verbundwerkstoff im Rohzustand an die Haut (91) im Inneren der Aufnahme-Gießform (2),
d) ein Schritt zum gleichzeitigen Aushärten von Haut und Verstärkungselementen, und
e) ein Schritt zum Entformen des Hohlteils aus Verbundwerkstoff.

5. Verfahren nach Anspruch 4, **dadurch gekennzeichnet, dass** es nach Schritt c) das Einsetzen einer Einsteck-Gegenform (4) in das Innere der Aufnahme-Gießform (2) an die Haut aus Verbundwerkstoff und an die Verstärkungselemente (92) umfasst, wobei diese Einsteck-Gegenform während des Aushärtungsschritts d) festgehalten wird.

6. Verfahren nach Anspruch 4 oder 5, **dadurch gekennzeichnet, dass** es einen Schritt zum Zusammenfügen der Haut (91) mit einem komplementären Teil aus Verbundwerkstoff umfasst, das aus einem oder mehreren Stücken besteht und eine Form komplementär zu derjenigen der Längsöffnung der Haut hat, um ein Hohlteil mit geschlossenem Querschnitt zu bilden.

7. Verfahren nach Anspruch 6, **dadurch gekennzeichnet, dass** das komplementäre Teil mit der ausgehärteten Haut (91) nach dem Aushärtungsschritt d) zusammengefügt wird.

8. Verfahren nach Anspruch 6, **dadurch gekennzeichnet, dass** es nach dem Schritt c) einen Schritt zum Positionieren eines komplementären Teils im Rohrzustand im Bereich des Längsspalts (26) der Aufnahme-Gießform umfasst, wobei das komplementäre Teil ausgehärtet und mit der Haut (91) beim Aushärtungsschritt d) zusammengefügt wird, so dass ein geschlossenes Hohlteil erhalten wird.

9. Verfahren zum Herstellen von Flugzeugrümpfen, **dadurch gekennzeichnet, dass** es umfasst:
- das Herstellen zumindest zweier offener Flugzeugrumpfabschnitte nach einem der Ansprüche 4 bis 8,
- und das Zusammenfügen eines oder mehrerer komplementärer Teile aus Verbundwerkstoff zum Bilden von sich über 360° erstreckenden, geschlossenen Abschnitten, wobei die komplementären Teile den oberen Bereich des Rumpfs bilden.

10. Vorrichtung zum Durchführen des Verfahrens nach einem der Ansprüche 1 bis 9, **dadurch gekennzeichnet, dass** sie aufweist:
- einen mit einem Faseranordnungskopf (13) versehenen, mehrfach angelenkten Arm (11), der an zumindest einer am Boden abgestützten linearen Schiene (121, 122) verstellbar gelagert ist,
- eine Aufnahme-Gießform (2) mit zumindest einem offenen Ende (24) und einem Längsspalt (26), der zum offenen Ende mündet, und
- Haltemittel (27, 28), welche die Aufnahme-Gießform stationär über der am Boden abgestützten Schiene im wesentlichen über ihre gesamte Länge beiderseits der Schiene festhalten können, so dass der mehrfach angelenkte Arm sich im Inneren der Gießform verlagern kann, indem er über ihr offenes Ende eintritt.
